# EUROPEAN PATENT SPECIFICATION

(11) **EP 3 844 584 B1**
(45) Date of publication and mention of the grant of the patent: **03.07.2024**
(21) Application number: 18932151.6
(22) Date of filing: 28.08.2018
(51) Int. Cl.: G05D 1/00

(54) **SELF-DRIVING VEHICLE MANAGEMENT SYSTEMS AND METHODS**
VERWALTUNGSSYSTEME UND -VERFAHREN FÜR SELBSTFAHRENDE FAHRZEUGE
SYSTÈMES ET PROCÉDÉS DE GESTION DE VÉHICULE AUTONOME

(43) Date of publication of application: 07.07.2021
(73) Proprietor: Lingdong Technology (Beijing) Co. Ltd, Haidian District Beijing 100086 (CN)
(72) Inventor: ZHANG, Guangpeng, Beijing 100190 (CN); CHEN, Chiung Lin, Beijing 100190 (CN)
(74) Representative: Becker Kurig & Partner Patentanwälte mbB
(86) International application number: PCT/CN2018/102639
(87) International publication number: WO 2020/041964

(56) References cited:
- WO-A1-2018/021457
- WO-A1-2018/147953
- CN-A- 107 407 936
- CN-A- 107 807 636
- CN-A- 108 137 232
- GB-A- 2 319 378
- JP-A- H11 184 521
- JP-A- 2015 069 218
- TW-A- 201 629 661
- US-A1- 2018 053 141
- US-A1- 2018 217 606
- US-B2- 8 918 202

## Description

### BACKGROUND

### Field

Embodiments disclosed herein relate to self-driving vehicle management systems and methods.

### Description of the Related Art

Automated guided vehicles (AGVs) are autonomous self-driving vehicles used in a variety of different environments. For example, AGVs are used in warehouses to assist with moving inventory from one area to another. However, one problem that operators face is whenever there is a change in the warehouse environment, such as a change in the arrangement or height of shelves and workbenches, the AGVs have to be taken offline and reprogrammed to account for such changes. A similar problem is encountered when there is a change in the task assigned to an AGV or when there is an inadvertent obstacle placed in front of the AGV. There is no way to quickly reprogram the AGV to adjust for such changes or obstacles. These problems often result in a reduction in productivity and efficiency.

Therefore, there exists a need for new and improved self-driving vehicle management systems and methods.

Document GB2319378A discloses an autonomous guided vehicle guidance device and a sign comprising information. Document US20180053141A1 discloses an inventory management system and a computer-implemented method thereof. These documents in the prior art may be useful for understanding the present application. The present application has improvements and advantages over these documents, which will be better understood from the following description.

### SUMMARY

In one embodiment, a method of operating a self-driving system comprises receiving formal routing and task instructions from a control system or a system administrator, wherein the formal routing and task instructions are received by a self-driving vehicle; placing temporarily one or more markers within or near a workspace to change the formal routing and task instructions when a worker and/or item in the workspace would prevent the self-driving vehicle from passing through or rotating within the workspace; detecting and retrieving routing and task instructions from one or more markers using a camera coupled to the self-driving vehicle, wherein the routing and task instructions from the markers are different than the formal routing and task instructions, and comprise a height of a workbench within the workspace, and the self-driving vehicle comprises a mobile base having an upper surface; following the routing and task instructions retrieved from the markers and adjusting a height of the upper surface of the mobile base according to the height of the workbench to raise or lower an inventory holder with inventory for ease of handling the inventory, by using the self-driving vehicle; sending the routing and task instructions retrieved from the markers to the control system or the system administrator to update the formal routing and task instructions; and removing the one or more markers from the workspace.

### BRIEF DESCRIPTION OF THE DRAWINGS

Figure 1 is a perspective view of an automated guided vehicle (AGV) according to one embodiment.
Figure 2 is a top view of the AGV according to another embodiment.
Figure 3 is a perspective view of an inventory holder positioned on the AGV according to one embodiment.
Figure 4 is a schematic view of the AGV moving into a workspace according to one embodiment.
Figure 5A is a schematic view of the AGV in the workspace according to one embodiment.
Figure 5B is a schematic view of the AGV in the workspace according to one embodiment.
Figure 6A is a schematic view of the AGV rotating within the workspace according to one embodiment.
Figure 6B is a schematic view of the AGV moving out of the workspace according to one embodiment.
Figure 7 is a schematic view of the AGV reversing into the workspace according to one embodiment.
Figure 8 is a schematic view of a sequence of operation of the AGV according to one embodiment.
Figure 9 is a schematic view of a sequence of operation of the AGV according to one embodiment.
Figure 10 is a flow chart of a sequence of operation of the AGV according to one embodiment.

To facilitate understanding, identical reference numerals have been used, where possible, to designate identical elements that are common to the figures. It is contemplated that elements disclosed in one embodiment may be beneficially utilized with other embodiments without specific recitation.

### DETAILED DESCRIPTION

Embodiments of the disclosure include self-driving vehicle management systems and methods configured to provide formal routing and task instructions to automated guided vehicles (AGVs), as well as to provide any permanent or temporary change in the routing or task instructions without having to take the AGVs offline for reprogramming. The formal routing and task instructions, as well as any permanent or temporary changes in the routing or task instructions can be provided by an operator and/or one or more markers, such as bar codes.

AGVs are self-driving vehicles and include but are not limited to mobile robots, such as autonomously-navigating mobile robots, inertially-guided robots, remote-controlled mobile robots, and/or robots guided by laser targeting, vision systems, and/or roadmaps. Although the embodiments of the self-driving vehicle management systems and methods are described and illustrated herein with respect to AGVs moving inventory in a warehouse environment, the embodiments may be used with any type of self-driving systems and methods in any type of environment.

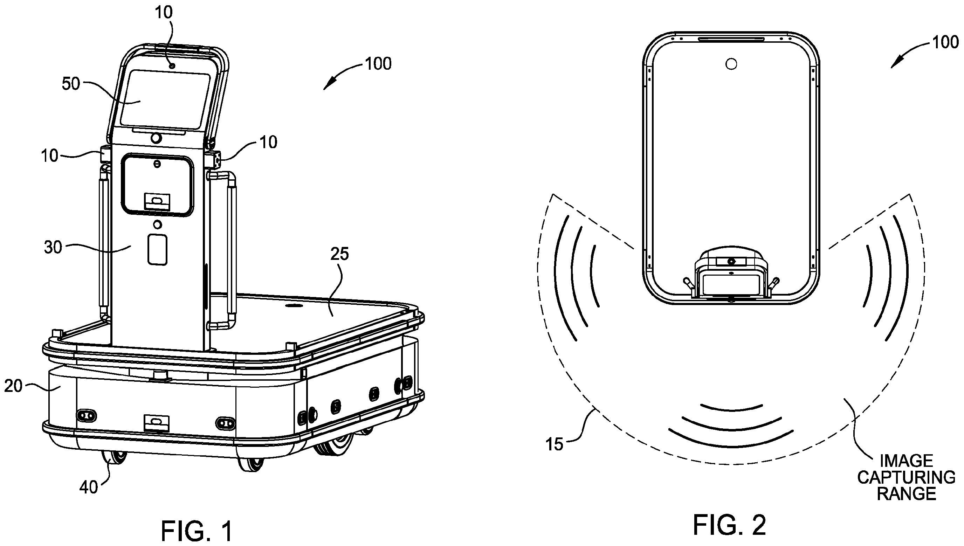

Figure 1 is a perspective view of an automated guided vehicle (AGV) 100. The AGV 100 includes a console 30 coupled in an upright position to a mobile base 20. The console 30 has a display 50 configured to display information and allow an operator to control the operation of the AGV 100. The mobile base 20 has a plurality of motorized wheels 40 configured to rotate and/or roll in any given direction to move the AGV 100. The mobile base 20 has an upper surface 25 that can be used to support inventory.

One or more cameras 10 are shown coupled to the upper end of the console 30 of the AGV 100. One camera 10 is located on the top center of the console 30, one camera 30 is located on the right side of the console 30, and one camera 30 is located on the left side of the console 30. Although only three cameras 30 are shown, any number or arrangement of cameras can be used.

Figure 2 is a top view of the AGV 100 according to one embodiment. As shown in Figure 2, the cameras 30 are located on the AGV 100 to provide an image capturing range 15 that includes areas in the front and on both sides of the AGV 100. The image capturing range 15 may include a 180 degree viewing area, a 270 degree viewing area, a 360 degree viewing area, or any viewing area between 180 degrees and 360 degrees. The cameras 30 are configured to scan and record visual images, as well as detect the presence of nearby objects. The cameras 30 may include but are not limited to a monocular camera, a binocular camera, and/or a stereo camera.

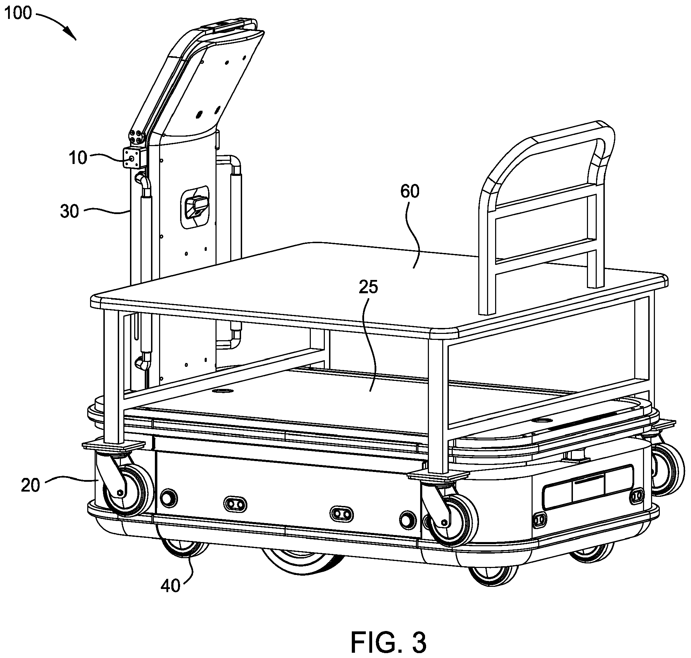

Figure 3 is a perspective view of an inventory holder 60 positioned on the upper surface 25 of the mobile base 20 of the AGV 100 according to one embodiment. Inventory can be positioned directly on the upper surface 25 of the mobile base 20. Inventory can be positioned directly on the inventory holder 60. The AGV 100 can move the inventory and/or inventory holder 60 from one location to another location. Although the inventor holder 60 is shown as a handcart having wheels, the inventory holder 60 can be a basket, a bin, or any other type of wheeled cart or container that can be used to contain, carry and/or transport items, such as inventory.

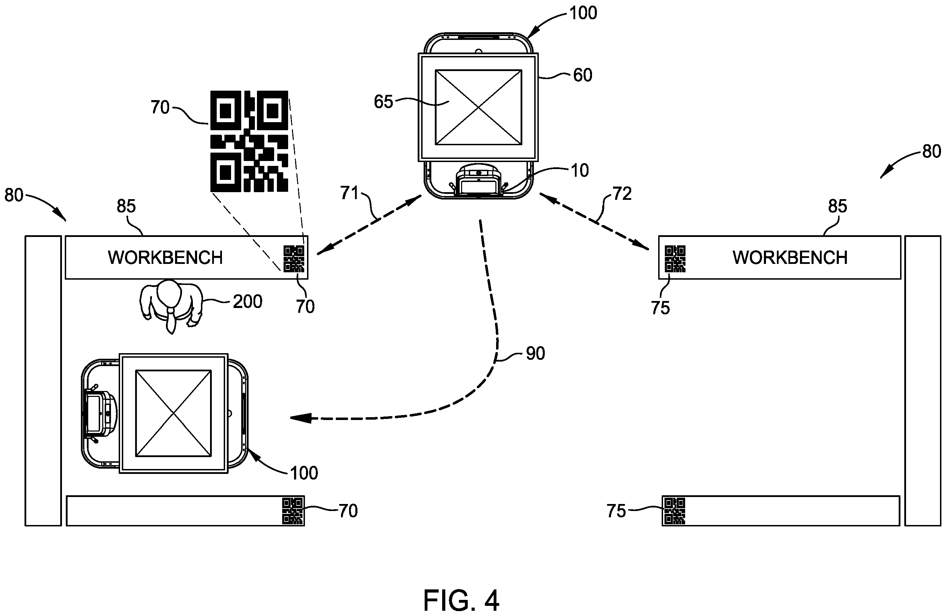

Figure 4 is a schematic view of the AGV 100 moving into a workspace 80 of a warehouse according to one embodiment. The AGV 100 may be provided with formal routing and task instructions to follow a travel path 90 and take the inventory 65 and the inventory holder 60 to a workspace 80 where a worker 200 is located. As indicated by reference arrows 71, 72, the AGV 100 detects and retrieves routing and task instructions from one or more markers 70, 75, such as barcodes, that are within the image capturing range of the cameras 10.

The markers 70, 75 may contain routing and task instructions that are the same or different than the formal routing and task instructions. The markers 70, 75 can be used to confirm the formal routing and task instructions, change the formal routing and task instructions, and/or add to the formal routing and task instructions. The worker 200 can place and remove any number of markers 70, 75 to confirm, change, and/or add to the formal routing and task instructions. The markers 70, 75 are shown positioned at the ends of workbenches 85 but can be positioned anywhere within or near the workspaces 80.

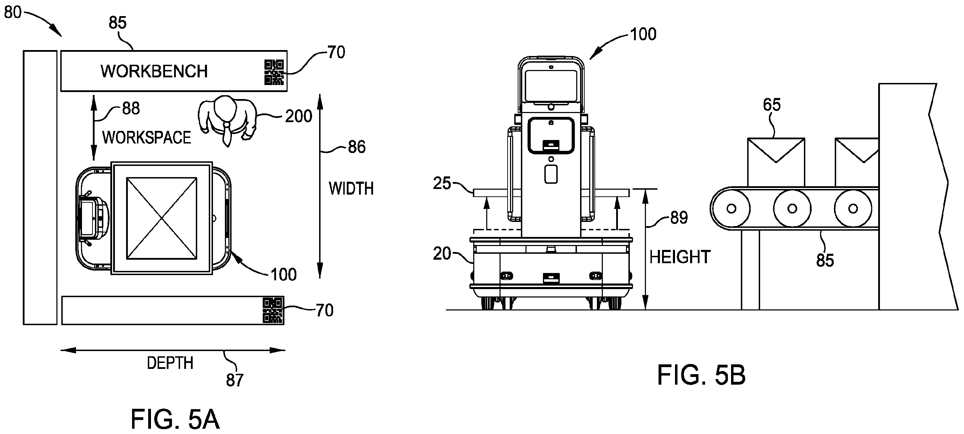

Figures 5A and 5B are schematic views of the AGV 100 in the workspace 80 according to one embodiment. The AGV 100 may retrieve routing and task instructions from the marker 70. The routing and task instructions may include instructions and/or information regarding travel paths to follow, actions to perform, and/or the workspace 80.

Instructions and/or information regarding the travel paths may include but are not limited to position and/or location information of the warehouse and/or items within the warehouse, such as horizontal and/or vertical coordinates of the workspace 80 and/or the workbench 85.

Instructions and/or information regarding the actions to perform may include but are not limited to reverse into the workspace 80, rotate 180 degrees within the workspace 80, stay, leave, carry away, wait a predetermined amount of time then go, return, go to another location, and/or adjust the height of the upper surface 25 of the mobile base 20 of the AGV 100.

Instructions and/or information regarding the workspace 80 may include but is not limited whether the AGV 100 can or cannot pass through the workspace 80, the depth (reference arrow 87), the width (reference arrow 86), the size of the working area (reference arrow 88) for the worker 200, the height (reference arrow 89) of the workbench 85, and/or how close to park near the workbench 85.

Based on the routing and task instructions, the AGV 100 is configured to determine whether there is a sufficient amount of space for the AGV 100 to move itself, any inventory, and/or the inventory holder into the workspace 80 without crashing into the worker 200 and/or the workbench 85. If the AGV 100 determines that there is a sufficient amount of space, then the AGV 100 is configured to continue with the routing and task instructions and move into the workspace 80. In addition, the AGV 100 is configured to adjust the height of the upper surface 25 of the mobile base 20 to the appropriate height relative to the workbench 80 to raise and lower the inventory holder 60 and the inventory 65 for ease of handling the inventory 65. If the AGV 100 determines that there is not a sufficient amount of space, then the AGV 100 is configured to stop the routing and task instructions and send an error notice to the worker 200 and/or a system administrator.

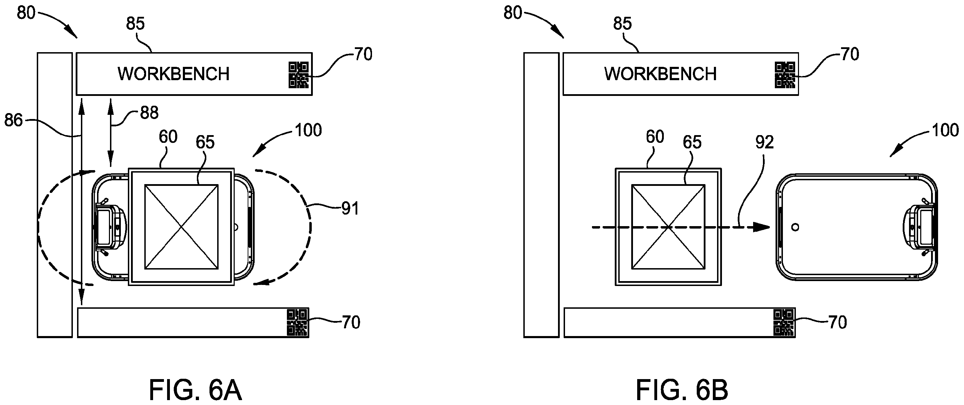

Figure 6A is a schematic view of the AGV 100 rotating 180 degrees within the workspace 80, and Figure 6B is a schematic view of the AGV 100 moving out of the workspace 80, according to one embodiment. Based on the routing and task instructions retrieved from the marker 70 regarding the workspace 80, such as the width (reference arrow 86) and/or the working area (reference arrow 88), the AGV 100 is configured to determine if there is a sufficient amount of space to turn 180 degrees, lower the inventory holder 60 onto the ground, and then move straight out of the workspace 80. If the AGV 100 determines that there is a sufficient amount of space, then the AGV 100 is configured to rotate 180 degrees as indicated by reference arrow 91, lower the inventory holder 60 with the inventory 65 onto the ground, and move straight out of the workspace 80 as indicated by reference arrow 92.

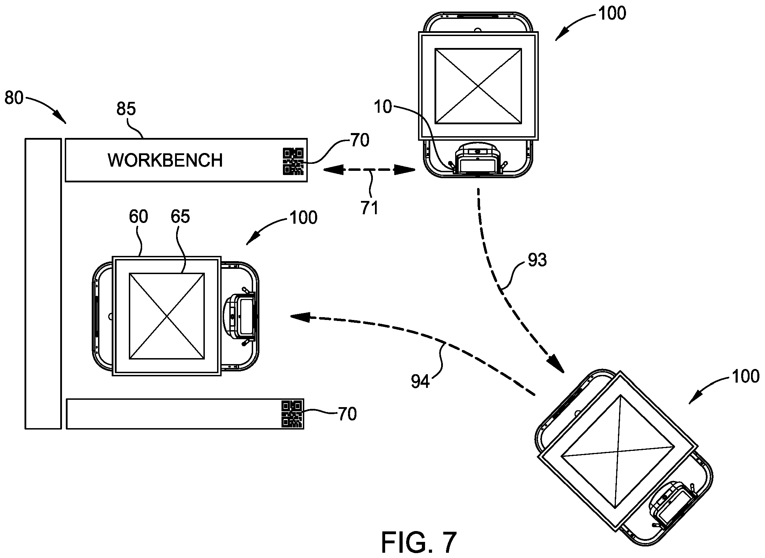

Figure 7 is a schematic view of the AGV 100 reversing into the workspace 80 according to one embodiment. Based on the routing and task instructions retrieved from the marker 70 regarding the workspace 80, if the AGV 100 determines that there is not a sufficient amount of space to turn 180 degrees, then the AGV 100 is configured to reverse into the workspace 80 as indicated by reference arrows 93, 94. The AGV 100 can reverse (e.g. move backwards) into the workspace 80, lower the inventory holder 60 with the inventory 65 onto the ground, and then move straight out of the workspace 80.

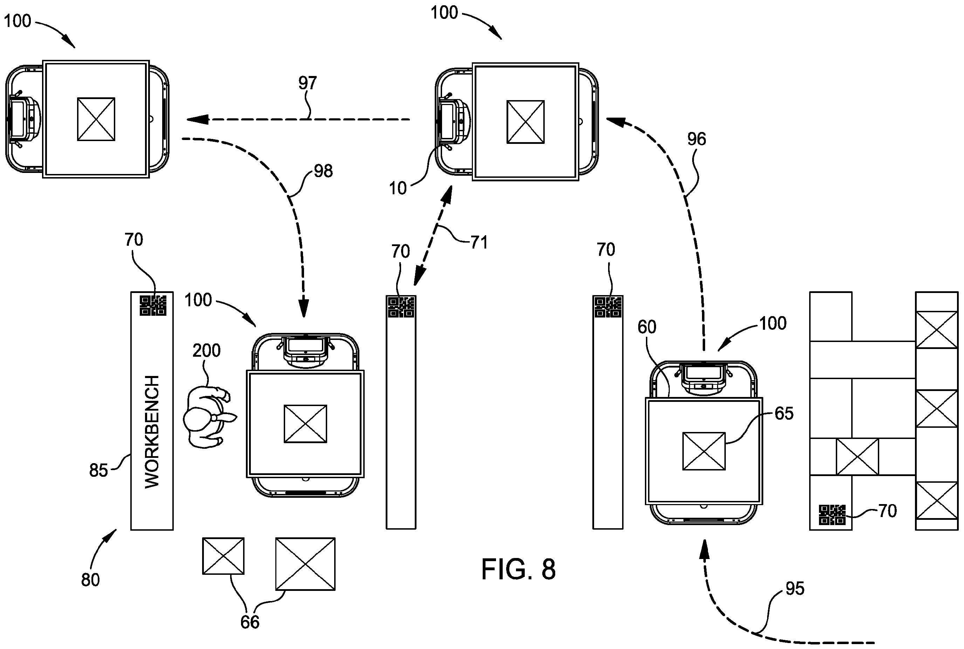

Figure 8 is a schematic view of a sequence of operation of the AGV 100 according to one embodiment. The AGV 100 may be provided with formal routing and task instructions to follow along travel path 95, retrieve the inventory 65, and then follow along travel path 96 to the worker 200 at workbench 85 waiting for the inventory 65. The formal routing and task instructions may indicate to the AGV 100 that there is sufficient space in the workspace 80 to rotate 180 degrees. However, the worker 200 has placed additional inventory items 66 in the workspace 80 that would prevent the AGV 100 from passing through or rotating 180 degrees within the workspace 80. To communicate with the AGV 100, the worker 200 can place one or more markers 70 at the end of the workbenches 85 for the AGV 100 to detect and retrieve routing and task instructions regarding the additional inventory items 66.

As the AGV 100 approaches the workbench 85, the camera 10 on the AGV 100 detects and retrieves the routing and task instructions from the marker 70 as indicated by reference arrow 71. The routing and task instructions retrieved from the marker 70 provides information that is different than the formal routing and task instructions of the AGV 100, specifically instructions to reverse (e.g. move backwards) into the workspace 80. In response, the AGV 100 follows the routing and task instructions retrieved from the marker 70 and reverses into the workspace 80 as indicated by reference arrows 97, 98.

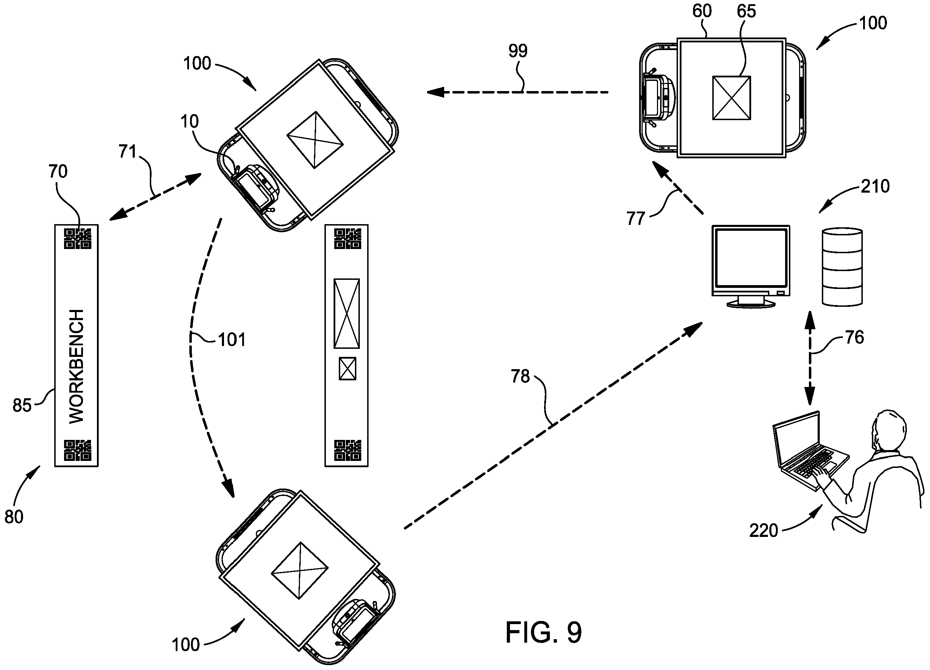

Figure 9 is a schematic view of a sequence of operation of the AGV 100 according to one embodiment. The AGV 100 may be provided with formal routing and task instructions from a control system 210 (such as a local server with pre-programmed instructions) and/or a system administrator 220 via wired or wireless communication as indicated by reference arrow 77. The system administrator 220 may be at a remote location and communicate with the AGV 100 through the control system 210 via wired or wireless communication as indicted by reference arrow 76. The AGV 100 may include a controller, such as a central processing unit, configured to communicate with the cameras 10, the motorized wheels 40, the control system 210, and/or the system administrator 220, and to control the operation of the AGV 100 based on the routing and task instructions received from the control system 210, the system administrator 220, and/or the one or more markers 70.

Based on the formal routing and task instructions received from the control system 210 and/or the system administrator 220, the AGV 100 may be instructed to follow along travel path 99 and drop off the inventory 65 at the workbench 85. In the event that the inventory 65 is no longer needed or there is no worker at the workbench, one or more markers 70 can be placed on the workbench 85 to instruct the AGV 100 to return the inventory 65 or to take the inventory 65 to a different workbench 85. As the AGV 100 approaches the workbench 85, the camera 10 on the AGV 100 detects and retrieves the routing and task instructions from the marker 70 as indicated by reference arrow 71. The routing and task instructions retrieved from the marker 70 provides information to change the formal routing and task instructions of the AGV 100 to follow travel path 101 and then return the inventory 65 or to take the inventory 65 to a different workbench 85. In response, the AGV is configured to follow the routing and task instructions retrieved from the marker 70.

In addition, the AGV 100 is configured to communicate the routing and task instructions retrieved from the marker 70 to the control system 210 and/or the system administrator 220 as indicated by reference arrow 78. After confirmation, the system administrator 220 can then update the formal routing and task instructions to match the routing and task instructions retrieved from the marker 70 so that the marker 70 is no longer needed.

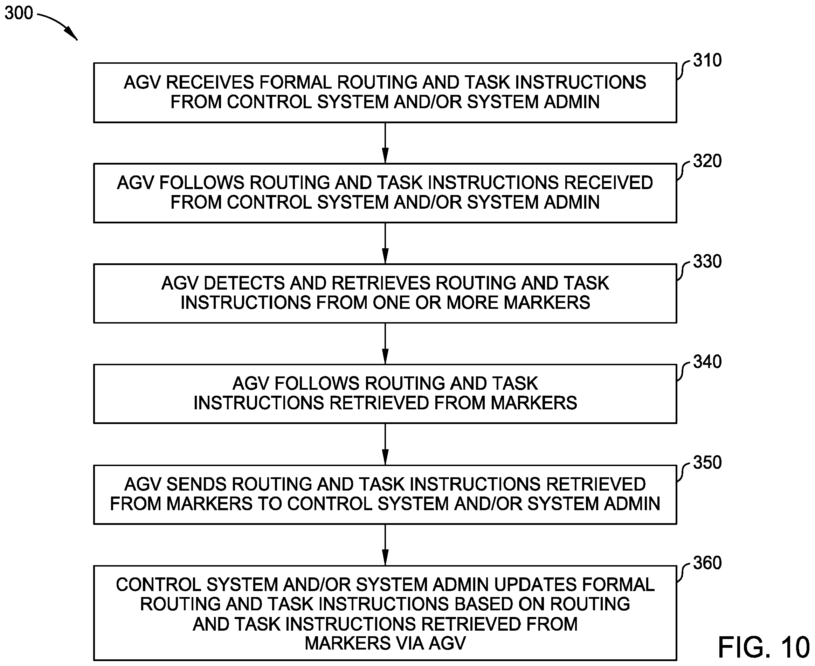

Figure 10 is a flow chart of a sequence of operation 300 of the AGV 100 according to one embodiment. At step 310, the AGV 100 receives formal routing and task instructions from the control system 210 and/or the system administrator 220. At step 320, the AGV 100 follows the formal routing and task instructions received from the control system 210 and/or the system administrator 220. At step 330, the AGV 100 detects one or more markers 70 and retrieves routing and task instructions from the one or more markers 70.

At step 340, the AGV 100 follows the routing and task instructions retrieved from the one or more markers 70. At step 350, the AGV 100 sends the routing and task instructions retrieved from the one or more markers 70 to the control system 210 and/or the system administrator 220. At step 360, after confirmation by the control system 210 and/or the system administrator 220, the routing and task instructions retrieved from the one or more markers 70 via the AGV 100 are updated and become part of the formal routing and task instructions stored on the control system 210.

Figures 8-10 illustrate some sequences of operation of the AGV 100 using the self-driving vehicle management systems and methods as disclosed herein, but the AGV 100 is capable of following any number of routing and task instructions to follow any number of travel paths, to perform any number of actions, and to move into and out of any number of workspaces without crashing into any workers or workbenches.

## Claims

1. A method of operating a self-driving system, **characterized in that** the method comprises:
receiving formal routing and task instructions from a control system (210) or a system administrator (220), wherein the formal routing and task instructions are received by a self-driving vehicle (100) comprising a mobile base (20) having an upper surface (25);
placing temporarily one or more markers (70) within or near a workspace (80) to change the formal routing and task instructions when a worker (200) and/or item (66) in the workspace (80) would prevent the self-driving vehicle (100) from passing through or rotating within the workspace (80);
detecting and retrieving routing and task instructions from the one or more markers (70) using a camera (10) coupled to the self-driving vehicle (100), wherein the routing and task instructions from the markers (70) are different than the formal routing and task instructions, and comprise a height of a workbench (85) within the workspace (80);
following the routing and task instructions retrieved from the markers (70) and adjusting a height (89) of the upper surface (25) of the mobile base (20) according to the height of the workbench (85) to raise or lower an inventory holder (60) with inventory (65) for ease of handling the inventory (65), by using the self-driving vehicle (100);
sending the routing and task instructions retrieved from the markers (70) to the control system (210) or the system administrator (220) to update the formal routing and task instructions; and
removing the one or more markers (70) from the workspace (80).

2. The method of claim 1, wherein the markers (70) are barcodes.

3. The method of claim 1, wherein the routing and task instructions retrieved from the markers (70) include
instructions to reverse the self-driving vehicle (100) into a workspace (80), or
instructions to rotate the self-driving vehicle (100) 180 degrees within a workspace (80), or
instructions to transport inventory (65) using the self-driving vehicle (100) to a different location, or
instructions and/or information regarding a travel path to follow, or
instructions and/or information regarding an action to perform, or
instructions and/or information regarding a workspace (80).

4. The method of claim 3, wherein the instructions and/or information regarding the travel path to follow includes position and location information of a warehouse or items within the warehouse.

5. The method of claim 3, wherein the instructions and/or information regarding the action to perform includes reverse into a workspace (80), rotate 180 degrees within the workspace (80), stay, leave, carry away, wait a predetermined amount of time then go, return, go to another location, or adjust a height of the self-driving vehicle (100).

6. The method of claim 3, wherein the instructions and/or information regarding the workspace (80) includes whether the self-driving vehicle (100) can or cannot pass through, a depth, a width, a size of a working area, or how close to park the self-driving vehicle (100) near the workbench.

7. The method of claim 1, wherein the self-driving vehicle (100) is configured to transport the inventory holder (60) with inventory (65) from one location to another location.

8. The method of claim 7, wherein the self-driving vehicle (100) includes a console (30) coupled in an upright position to the mobile base (20) having motorized wheels (40) to move the self-driving vehicle (100).

9. The method of claim 8, wherein the upper surface (25) is configured to raise and lower the inventory holder (60) with the inventory (65).

10. The method of claim 9, wherein the camera (10) comprises at least three cameras (10) coupled to the console (30).

## Patentansprüche

1. Verfahren zum Betreiben eines autonom fahrenden Systems, **dadurch gekennzeichnet, dass** das Verfahren Folgendes umfasst:
Empfangen von formellen Routenführungs- und Aufgabenanweisungen von einem Steuerungssystem (210) oder einem Systemadministrator (220), wobei die formellen Routenführungs- und Aufgabenanweisungen durch ein autonom fahrendes Fahrzeug (100) empfangen werden, das einen mobilen Träger (20) mit einer oberen Fläche (25) umfasst;
vorübergehendes Anbringen von einer oder mehreren Markierungen (70) in einen Arbeitsraum (80) oder in dessen Nähe, um die formellen Routenführungs- und Aufgabenanweisungen zu ändern, wenn eine Arbeitskraft (200) und/oder ein Element (66) im Arbeitsraum (80) verhindert, dass das autonom fahrende Fahrzeug (100) den Arbeitsraum (80) durchquert oder sich darin dreht;
Erfassen und Abrufen von Routenführungs- und Aufgabenanweisungen von der einen oder den mehreren Markierungen (70) unter Verwendung einer Kamera (10), die an das autonom fahrende Fahrzeug (100) gekoppelt ist, wobei sich die Routenführungs- und Aufgabenanweisungen von den Markierungen (70) von den formellen Routenführungs- und Aufgabenanweisungen unterscheiden und eine Höhe einer Arbeitsbank (85) in dem Arbeitsraum (80) umfassen;
Einhalten der Routenführungs- und Aufgabenanweisungen von den Markierungen (70) und Anpassen einer Höhe (89) von der oberen Fläche (25) des mobilen Trägers (20) gemäß der Höhe der Arbeitsbank (85), um einen Inventarhalter (60) mit Inventar (65) zur leichteren Handhabung des Inventars (65) unter Verwendung des autonom fahrenden Fahrzeugs (100) anzuheben oder abzusenken;
Senden der von den Markierungen (70) abgerufenen Routenführungs- und Aufgabenanweisungen an das Steuerungssystem (210) oder den Systemadministrator (220), um die formellen Routenführungs- und Aufgabenanweisungen zu aktualisieren; und
Entfernen der einen oder mehreren Markierungen (70) aus dem Arbeitsraum (80).

2. Verfahren nach Anspruch 1, wobei die Markierungen (70) Strichcodes sind.

3. Verfahren nach Anspruch 1, wobei die von den Markierungen (70) abgerufenen Routenführungs- und Aufgabenanweisungen Folgendes beinhalten:
Anweisungen zum Zurücksetzen des autonom fahrenden Fahrzeugs (100) in einen Arbeitsraum (80) oder
Anweisungen zum Drehen des autonom fahrenden Fahrzeugs (100) um 180 Grad in einen Arbeitsraum (80) oder
Anweisungen zum Transportieren von Inventar (65) unter Verwendung des autonom fahrenden Fahrzeugs (100) an einen anderen Ort oder
Anweisungen und/oder Informationen zu einer zu befolgenden Fahrtroute oder
Anweisungen und/oder Informationen zu einer durchzuführenden Aktion oder
Anweisungen und/oder Informationen zu einem Arbeitsraum (80).

4. Verfahren nach Anspruch 3, wobei die Anweisungen und/oder Informationen zur Fahrtroute Positions- und Ortsinformationen eines Lagers oder von Elementen in dem Lager beinhalten.

5. Verfahren nach Anspruch 3, wobei die Anweisungen und/oder Informationen zu der durchzuführenden Aktion Zurücksetzen in einen Arbeitsraum (80), Drehen um 180 Grad in dem Arbeitsraum (80), Bleiben, Verlassen, Wegtragen, Warten für eine vorgegebene Zeit und dann Wegfahren, Zurückkehren, Fahren zu einem anderen Ort oder Anpassen einer Höhe des autonom fahrenden Fahrzeugs (100) beinhalten.

6. Verfahren nach Anspruch 3, wobei die Anweisungen und/oder Informationen zum Arbeitsraum (80) beinhalten, ob das autonome Fahrzeug (100) ihn durchqueren kann, eine Tiefe, eine Breite, eine Größe eines Arbeitsbereichs oder wie nah das autonom fahrende Fahrzeug (100) an der Arbeitsbank zu parken ist.

7. Verfahren nach Anspruch 1, wobei das autonom fahrende Fahrzeug (100) dazu konfiguriert ist, den Inventarhalter (60) mit Inventar (65) von einem Ort zu einem anderen Ort zu transportieren.

8. Verfahren nach Anspruch 7, wobei das autonom fahrende Fahrzeug (100) eine Konsole (30) beinhaltet, die in aufrechter Stellung an den mobilen Träger (20) gekoppelt ist, der motorisierte Räder (40) aufweist, um das autonom fahrende Fahrzeug (100) zu bewegen.

9. Verfahren nach Anspruch 8, wobei die obere Fläche (25) dazu konfiguriert ist, den Inventarhalter (60) mit dem Inventar (65) anzuheben und abzusenken.

10. Verfahren nach Anspruch 9, wobei die Kamera (10) wenigstens drei Kameras (10) umfasst, die an die Konsole (30) gekoppelt sind.

## Revendications

1. Un procédé d'exploitation de système de conduite autonome, **caractérisé en ce que** le procédé comprend :
recevoir des instructions d'acheminement et de tâche formelles depuis un système de commande (210) ou un administrateur système (220), dans lequel les instructions d'acheminement et de tâche sont reçues par un véhicule à conduite autonome (100) comprenant une base mobile (20) munie d'une surface supérieure (25) ;
placer temporairement un ou plusieurs marqueurs (70) dans ou à proximité d'un espace de travail (80) pour changer les instructions d'acheminement et de tâche formelles lorsqu'un travailleur (200) et/ou un objet (66) dans l'espace de travail (80) est susceptible d'empêcher le véhicule à conduite autonome (100) de passer à travers ou de tourner dans l'espace de travail (80) ;
détecter et récupérer des instructions d'acheminement et de tâche depuis ou plusieurs marqueurs (70) à l'aide d'une caméra (10) couplée au véhicule à conduite autonome (100), dans lequel les instructions d'acheminement et de tâche des marqueurs (70) sont différentes des instructions d'acheminement et de tâche formelles, et comprennent une hauteur d'établi (85) dans l'espace de travail (80) ;
suivre les instructions d'acheminement et de tâche récupérées auprès des marqueurs (70) et ajuster la hauteur (89) de la surface supérieure (25) de la base mobile (20) en fonction de la hauteur d'établi (85) pour relever ou abaisser un support d'inventaire (60) avec inventaire (65) pour faciliter la manutention de l'inventaire (65), en utilisant le véhicule à conduite autonome (100) ;
envoyer les instructions d'acheminement et de tâche récupérées auprès des marqueurs (70) au système de commande (210) ou à l'administrateur système (220) pour mettre à jour les instructions d'acheminement et de tâche formelles ; et
enlever le un ou plusieurs marqueurs (70) de l'espace de travail (80).

2. Un procédé selon la revendication 1, dans lequel les marqueurs (70) sont des code-barres.

3. Un procédé selon la revendication 1, dans lequel les instructions d'acheminement et de tâche récupérées auprès des marqueurs (70) incluent
des instructions pour que le véhicule à conduite autonome (100) fasse une marche arrière dans un espace de travail (80), ou
des instructions pour que le véhicule à conduite autonome (100) tourne à 180 degrés dans un espace de travail (80), ou
des instructions pour transporter l'inventaire (65) à l'aide du véhicule à conduite autonome (100) dans un lieu différent, ou
des instructions et/ou des informations concernant le chemin de parcours à suivre, ou
des instructions et/ou des informations concernant une action à accomplir, ou
des instructions et/ou des informations concernant un espace de travail (80).

4. Un procédé selon la revendication 3, dans lequel les instructions et/ou les informations concernant le chemin de parcours à suivre incluent des informations de position et de localisation d'un entrepôt ou d'objets dans un entrepôt.

5. Un procédé selon la revendication 3, dans lequel les instructions et/ou les informations concernant l'action à accomplir incluent la marche arrière dans un espace de travail (80), la rotation à 180 degrés dans un espace de travail (80), rester, quitter, emporter, attendre une certaine longueur de temps puis aller, retourner, aller dans un autre lieu, ou ajuster la hauteur du véhicule à conduite autonome (100).

6. Un procédé selon la revendication 3, dans lequel les instructions et/ou les informations concernant l'espace de travail (80) incluent si le véhicule à conduite autonome (100) peut ou ne peut pas passer, une profondeur, une largeur, une dimension d'une zone de travail, ou à quelle proximité de l'établi garer le véhicule à conduite autonome (100).

7. Un procédé selon la revendication 1, dans lequel le véhicule à conduite autonome (100) est configuré pour transport le support d'inventaire (60) avec l'inventaire (65) depuis un lieu jusqu'à un autre lieu.

8. Un procédé selon la revendication 7, dans lequel le véhicule à conduite autonome (100) inclut une console (30) couplée en position verticale à la base mobile (20) munie de roues motorisées (40) afin de déplacer le véhicule à conduite autonome (100).

9. Un procédé selon la revendication 8, dans lequel la surface supérieure (25) est configurée pour relever ou abaisser un support d'inventaire (60) avec l'inventaire (65).

10. Un procédé selon la revendication 9, dans lequel la caméra (10) comprend au moins trois caméras (10) couplées à la console (30).
